# FASCICULE DE BREVET EUROPEEN

(11) **EP 1 656 536 B1**
(45) Date de publication et mention de la délivrance du brevet: **14.03.2007**
(21) Numéro de dépôt: 04786323.8
(22) Date de dépôt: 18.08.2004
(51) Int. Cl.: G01B 9/02

(54) **DISPOSITIF ET PROCEDE DE DETECTION ET DE MESURE NON INVASIVES DES PROPRIETES D'UN MILIEU**
EINRICHTUNG UND VERFAHREN ZUR EINDRINGUNGSFREIEN DETEKTION UND MESSUNG DER EIGENSCHAFTEN EINES MEDIUMS
DEVICE AND METHOD FOR THE NON-INVASIVE DETECTION AND MEASUREMENT OF THE PROPERTIES OF A MEDIUM

(30) Priorité: 22.08.2003 FR 0310116
(43) Date de publication de la demande: 17.05.2006
(73) Titulaire: CENTRE NATIONAL DE LA RECHERCHE SCIENTIFIQUE (CNRS), 75794 Paris Cedex 16 (FR); ECOLE NORMALE SUPERIEURE DE CACHAN, 94235 Cachan (FR)
(72) Inventeur: TOURY, Timothée, Pol, Jean, F-08090 Tournes (FR); ZYSS, Joseph, F-92330 Sceaux (FR)
(74) Mandataire: Texier, Christian
(86) Numéro de dépôt international: PCT/FR2004/002157
(87) Numéro de publication internationale: WO 2005/022128

(56) Documents cités:
- EP-A- 0 864 872
- US-A- 5 394 098
- US-A1- 2002 003 628
- D. LEINER, D. MOORE: "Real-time phase microscopy using a phase-lock interferometer" RE, SCI. IMSTRUM., vol. 49, no. 12, 1 décembre 1978 (1978-12-01), pages 1702-1705, XP002315966

## Description

La présente invention est relative aux dispositifs et procédés de détection et de mesure non invasives des propriétés optiques et de champs électriques d'un milieu.

Plus particulièrement, l'invention concerne un dispositif de détection non invasive des propriétés d'un milieu par interférométrie, ce dispositif comprenant :
- une source optique pour éclairer au moins une zone à sonder du milieu avec un faisceau lumineux dont le parcours définit un axe optique,
- des moyens de mesure des variations de la phase du faisceau lumineux au cours de son passage dans la zone à sonder, ces moyens de mesure
   - comprenant un interféromètre pour diviser le faisceau lumineux en un faisceau de référence et un faisceau sonde, dans cet interféromètre, l'asservissement des longueurs respectives du faisceau de référence et du faisceau sonde étant actif jusqu'à une fréquence de coupure fc, et
   - ayant une fréquence d'échantillonnage de signal fa.

Le document US-A-5 394 098 décrit un exemple d'un tel dispositif utilisé pour tester des composants opto-électroniques, en utilisant une source optique constituée d'un laser. Plus précisément, des champs électriques sont mesurés dans les composants opto-électroniques par l'intermédiaire d'une couche de matériau constituant un milieu optiquement actif recouvrant au moins la partie du composant que l'on veut tester. Un autre dispositif de détection non invasive est décrit dans le document XP002315966 ("Real-time phase microscopy using a phase-lock interferometer", D. LEINER, D. MOORE) publié dans RE, SCI. INSTRUM., vol. 49, no. 12, 1 décembre 1978 (1978-12-01).

Dans le présent document, on désigne par "milieu optiquement actif", un milieu présentant des propriétés électro-optiques et plus particulièrement un milieu présentant un effet électro-optique linéaire (dit effet Pockels), ou un effet électro-optique quadratique dont le seuil de manifestation est toutefois plus élevé que dans le cas linéaire, tout en restant compatible avec l'usage de lasers de puissance à impulsions brèves.

Ce type de dispositif présente cependant l'inconvénient de ne permettre des mesures qu'avec une fréquence d'échantillonnage de signal fa supérieure à la fréquence de coupure fc. Ce type de dispositif ne peut pas être utilisé en particulier pour la détection de champs électriques en volume dans des milieux biologiques. Car les variations de d'indice de réfraction dues aux champs électriques dans les systèmes biologiques ont essentiellement lieu à des fréquences inférieures à 1 kHz alors que la fréquence fc doit être de quelques kHz pour éliminer les bruits extérieurs (thermiques, mécaniques, acoustiques, etc.).

La présente invention a notamment pour but de pallier cet inconvénient.

A cet effet, on prévoit selon l'invention, un dispositif de détection non invasive des propriétés d'un milieu par interférométrie, qui, outre les caractéristiques déjà mentionnées, est caractérisé par le fait qu'il comporte des moyens de balayage adaptés pour balayer, avec le faisceau sonde, la zone à sonder et une zone de référence, avec une fréquence f d'acquisition d'images enregistrées par les moyens de mesure des variations de la phase du faisceau lumineux, supérieure à la fréquence de coupure fc.

Ainsi, on obtient une modulation de la fréquence de variation du signal correspondant au phénomène électro-optique observé, à une fréquence f plus élevée et avantageusement plus élevée que la fréquence de coupure fc de l'asservissement (qui est passe bas) des longueurs respectives du faisceau de référence et du faisceau sonde.

Notons également que la zone de référence peut avoir une taille minimale d'un pixel.

Dans des modes de réalisation de l'invention, on peut éventuellement avoir recours en outre à l'une et/ou à l'autre des dispositions suivantes :
- les moyens de balayage balayent la zone à sonder et la zone de référence selon une première direction de l'espace, à une fréquence fx et selon une deuxième direction de l'espace avec une fréquence fy, pour former une image de n pixels selon la première direction et m pixels selon la deuxième direction, les fréquences fx et fy étant choisies telles que fx=fy/n et fy=fa/m, fx et fy étant supérieures à fc ; en fait, ces première et deuxième directions de l'espace sont perpendiculaires à l'axe optique ;
- les moyens de mesure des variations de la phase du faisceau lumineux comprennent un microscope confocal, dans lequel est placée la zone à sonder de manière adaptée pour former une image d'un plan de la zone à sonder; ainsi, grâce au microscope confocal, on peut obtenir une résolution spatiale tridimensionnelle ; il est alors possible de sonder le volume du milieu ; cette disposition permet de sonder des milieux, sans préparation particulière si le milieu est doté de propriétés électro-optiques; la résolution spatiale de la mesure des champs électriques n'est limitée que par l'optique utilisée ;
- il comporte des moyens de déplacement du milieu, selon les trois dimensions de l'espace, sous le faisceau sonde;
- les moyens de balayage comprennent quatre déflecteurs acousto-optiques, deux pour défléchir le faisceau lumineux, en amont du microscope confocal, chacun respectivement dans l'une des première et deuxième directions de l'espace et deux pour redresser le faisceau lumineux chacun respectivement dans l'une des première et deuxième directions de l'espace, en aval du microscope confocal ;
- au moins un déflecteur acousto-optique, en aval du microscope confocal, est réglé pour incliner l'ordre 0 du faisceau lumineux par rapport à l'axe optique, et conserver l'ordre 1 paraxial ; ainsi, l'ordre 0 du faisceau quitte l'axe optique et l'un des ordres 1 du faisceau, en sortie des premiers déflecteurs, a une position moyenne dans l'axe optique ; si l'intensité de l'ordre 0 du faisceau est non nulle, la partie correspondante du faisceau quitte l'axe optique et ne parvient ni sur la zone à sonder, ni sur les moyens de photo-détection du faisceau ; éventuellement une lunette de Galilée permet d'augmenter l'angle entre l'ordre 1 et l'axe optique ; et
- il comporte, en amont du microscope confocal, des moyens de contrôle de la polarisation du faisceau sonde en incidence sur la zone à sonder.
   . De nombreux autres types de balayage que celui mentionné ci-dessus peuvent être envisagés. Pour n'en citer que quelques-uns :
   . Balayage rectangulaire : Le balayage est effectué sur une zone d'intérêt, comprenant la zone à sonder et la zone de référence, plus petite que la surface effectivement accessible. Ce type de balayage est en particulier intéressant si la zone à sonder est réduite, on peut alors en profiter pour balayer à plus haute fréquence avec la même résolution ou augmenter la résolution en resserrant les pixels ou toute solution intermédiaire.
   . Balayage de plusieurs rectangles : Le balayage est effectué sur une zone correspondant à un ensemble de rectangles tels que ceux décrits au paragraphe précédent. La zone de référence peut être unique alors que les différentes zones à sonder correspondent à des rectangles différents. Ceci peut être utile si la zone à sonder ne peut être couverte par un seul rectangle.
   . Balayage sur des surfaces de formes variées : Le balayage est effectué des surfaces circulaires, elliptiques, triangulaires, etc., ou sur une composition de ces surfaces.
   . Balayage sur des surfaces complexes : Le balayage est effectué sur des surfaces aux formes complexes, telles que l'application le nécessite, par exemple pour l'étude de tout ou partie d'un composant opto-électronique ou d'un système biologique (neurone, membrane, membrane artificielle, par exemple du type couche de Langmuir-Blodgett, ...).
   . Balayage paramétré : Le balayage est effectué selon des trajectoires avec des coordonnée x et y paramétrées comme suit :
      x = cos (w.n.t)
      y = cos (w.n.m.t)
où n et m sont sensiblement les nombres de pixels correspondant à une période d'acquisition respectivement selon les coordonnées x et y. Ce type de balayage permet de s'approcher au maximum des limites des modulateurs acousto-optiques. Bien entendu, on peut aussi ne conserver ce paramétrage que sur l'une des deux coordonnées.

Notons que la réalisation du système de commande de ces différents types de balayage sont connus de l'Homme du Métier.

Selon un autre aspect, l'invention concerne un procédé de mise en oeuvre du dispositif selon l'invention. Il s'agit, en particulier, d'un procédé de détection non invasive des propriétés d'un milieu par interférométrie, dans lequel :
- on éclaire au moins une zone à sonder du milieu avec une source optique générant un faisceau lumineux dont le parcours définit un axe optique,
- on utilise un interféromètre pour diviser le faisceau lumineux en un faisceau de référence et un faisceau sonde et mesurer le déphasage entre le faisceau de référence et le faisceau sonde après traversée de la zone à sonder,
- on asservit des longueurs respectives du faisceau de référence et du faisceau sonde à des moyens de photo-détection et
- on acquiert, avec les moyens de photo-détection, des images correspondant à la mesure du déphasage en différents points de la zone à sonder, avec une fréquence d'échantillonnage de signal fa supérieure à la fréquence de coupure fc de l'asservissement des longueurs respectives du faisceau de référence et du faisceau sonde,
caractérisé par le fait qu'on balaye avec le faisceau sonde, la zone à sonder et une zone de référence, avec une fréquence f d'acquisition d'images enregistrées par les moyens de mesure des variations de la phase du faisceau lumineux, supérieure à la fréquence de coupure fc.

Dans des modes de mise en oeuvre du procédé selon l'invention, on peut éventuellement avoir recours en outre à l'une et/ou à l'autre des dispositions suivantes :
- on procède à un balayage de la zone à sonder et la zone de référence selon une première direction de l'espace à une fréquence fx et selon une deuxième direction de l'espace avec une fréquence fy, pour former une image de n pixels selon la première direction et m pixels selon la deuxième direction, les fréquences fx et fy étant choisies telles que fx=fy/n et fy=fa/m, fx et fy étant supérieures à fc.
- on excite le milieu à une fréquence fe et on mesure la variation de la phase du faisceau sonde par rapport à celle du faisceau de référence, à cette même fréquence fe ;
- connaissant la distribution des propriétés électro-optiques du milieu, on réalise une cartographie du champ électrique dans le milieu ;
- on génère un champ électrique de configuration connue dans le milieu, de manière à révéler des propriétés électro-optiques du milieu ; et
- on dope le milieu avec des molécules, des ions, etc. ayant des propriétés électro-optiques, ou conférant au milieu des propriétés électro-optiques, afin d'exacerber les propriétés électro-optiques du milieu, si celui-ci en est déjà doté, ou pour révéler la présence de champs électriques dans un milieu qui ne possède pas intrinsèquement de telles propriétés.

La nature des milieux sondés peut, grâce à l'invention, être très diverse. Outre les composants opto-électroniques déjà cités, il peut s'agir d'une distribution locale, par exemple une interface entre deux milieux diélectriques distincts éventuellement dépourvus chacun de toute activité électro-optique intrinsèque. L'interface entre les deux milieux à caractères individuellement non électro-optiques, induit alors une brisure structurelle de centrosymétrie au voisinage de la discontinuité et la possibilité d'un effet électro-optique. Selon un autre exemple de distribution locale des propriétés électro-optiques, le milieu est amorphe. Il s'agit par exemple d'une matrice polymère contenant une solution solide de molécules électro-optiques dispersées aléatoirement et qui ont été localement orientées selon un ordre statistique non-centrosymétrique (sous l'effet d'un champ électrique induit localement par une électrode adéquate ou par des champs optiques selon une configuration dite d'orientation tout optique qui agit localement à la focale des faisceaux orientateurs). On peut désigner de telles occurrences locales de propriétés électro-optiques sous les appellations suggestives de "surfaces électro-optiques" (cas de la distribution bidimensionnelle ou quasi-bidimensionnelle de type membrane) ou d"'îlots électro-optiques" (voxels) dans le cas d'inclusions de structures électro-optiques exogènes au milieu ambiant. Par exemple, il s'agit dans ce cas, d'inclusions de structures électro-optiques dans un film de type polymère amorphe dépourvu de propriétés électro-optiques intrinsèques (ces inclusions présentant des dimensions aux échelles nanométriques ou microniques ; ce sont par exemple des nanocristaux présentant des propriétés non linéaires quadratiques). On peut, à l'inverse, créer par désorientation axiale un défaut local d'effet électro-optique au sein d'une structure électro-optique initialement homogène (telle qu'obtenue par orientation quasi-uniforme sous champ électrique dans une configuration classique de type aiguille corona). L'invention a en particulier de l'intérêt dans deux situations symétriques. D'une part, elle permet, quand la distribution des propriétés électro-optiques est inconnue, de révéler la cartographie spatiale de cette distribution a priori inconnue par mise sous champ électrique avec un jeu d'électrodes simples permettant de maîtriser aussi bien que possible la distribution du champ au sein de l'échantillon. D'autre part, quand la distribution spatiale des propriétés électro-optiques est bien connue par d'autres moyens (par exemple dans le cas d'un procédé technologique d'élaboration contrôlée de cette distribution), l'invention permet de déterminer la cartographie du champ interne ou externe au sein de la distribution, celle-ci dépendant à la fois de cette distribution a priori connue des propriétés électro-optiques, mais également de la géométrie des électrodes au travers desquelles est appliqué un champ électrique externe. Dans certains cas intermédiaires, la connaissance, tant de la distribution du champ électrique que des propriétés électro-optiques des structures, s'avère limitée. L'invention permet alors de réaliser avec certitude, en amont de cette double inconnue, une cartographie du déphasage optique ressenti par l'onde incidente qui vient sonder le milieu. Pour progresser dans la levée des indéterminations, l'homme de l'art émet alors des hypothèses structurelles et/ou physiques soit sur la structure du milieu électro-optique, soit sur la distribution du champ, soit sur une conjonction des deux.

D'autres aspects, buts et avantages de l'invention apparaîtront à la lecture de la description d'un de ses modes de réalisation.

L'invention sera également mieux comprise à l'aide des dessins, sur lesquels :
- la figure 1 est un schéma de principe d'un exemple de mode de réalisation d'un dispositif conforme à la présente invention ;
- la figure 2 représente schématiquement les moyens de balayage du dispositif de la figure 1 ;
- la figure 3 représente schématiquement le balayage réalisé avec les moyens de balayage de la figure 2 ;
- la figure 4 représente schématiquement une variante d'une partie du dispositif des figures 1 à 3 ; et
- les figures 5a à 5f représentent schématiquement quelques exemples d'applications du procédé selon l'invention.

Sur les différentes figures, les mêmes références désignent des éléments identiques ou similaires.

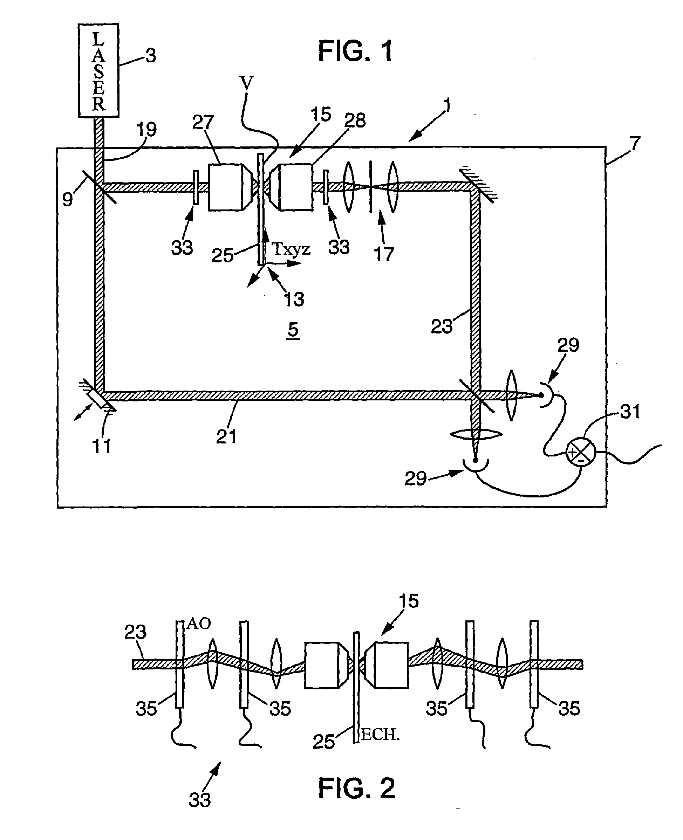

Un exemple de mode de réalisation du dispositif selon l'invention est présenté ci-dessous en relation avec les figures 1 à 5.

Selon cet exemple, le dispositif selon l'invention est un dispositif de détection et cartographie quantitatives et non invasives d'un champ ou potentiel électrique ou encore de leurs dérivées spatiales et/ou temporelles dans un milieu optiquement actif, éventuellement structurellement connu.

Comme représenté sur la figure 1, ce dispositif 1 est un microscope. Il comporte une source optique 3 et un interféromètre 5 constitutif de moyens de cartographie du déphasage d'un faisceau lumineux 7. Il permet ainsi de mesurer les variations de l'indice de réfraction.

La source optique 3 est par exemple un laser. La longueur d'onde,la puissance et la nature (pulsée ou continue) de ce laser sont, bien entendu, à adapter au milieu à sonder et plus particulièrement aux espèces (molécules, ions, matériau électronique, etc.) optiquement actives révélant le champ électrique régnant dans ce milieu. Par exemple, pour une application à l'étude de composants opto-électroniques on peut être amené à utiliser un laser He-Ne émettant à 632,8 nm, avec une puissance de quelques milliwatts.

L'interféromètre 5 comporte des moyens séparateurs 9, par exemple constitués d'une lame demi-onde et d'un polariseur, des miroirs asservis 11, un porte-échantillon 13, un microscope confocal 15 et des éléments optiques 17. Selon l'exemple de mode de réalisation du microscope présenté sur la figure 1, la détection de champs électriques est effectuée en transmission. Bien entendu, il est à la portée de l'Homme du Métier de transposer cet enseignement pour effectuer cette détection en réflexion.

L'interféromètre 5 est monté en détection homodyne. Les moyens séparateurs 9 divisent le faisceau lumineux 19 émis par la source 3 en un faisceau de référence 21 et un faisceau sonde 23. La quadrature entre le faisceau de référence 21 et le faisceau sonde 23 est asservie à π/2 afin d'avoir accès à la variation relative de chemin optique. Un exemple d'asservissement des miroirs 11 est donné dans le mémoire de thèse doctorale de P. F. Cohadon (Laboratoire Kastler-Brossel, université Paris VI, Janvier 2000).

Le faisceau sonde 23 est focalisé, en une région d'un échantillon 25 monté dans le porte-échantillon 13, par l'intermédiaire d'une première optique 27 du microscope confocal 15. Une deuxième optique 28 du microscope confocal 15 collecte le faisceau lumineux transmis par l'échantillon 25 au niveau de cette région. Notons que dans le cas d'une détection en réflexion, la réflexion peut éventuellement avoir lieu après la deuxième optique 28. Le faisceau lumineux est alors filtré par les éléments optiques 17 comprenant un diaphragme qui intercepte tout signal ne passant pas par le foyer de la deuxième optique 28.

L'échantillon 25 est déplacé sous le faisceau sonde 23 grâce à une cale piézoélectrique qui déplace le porte-échantillon 13, dans les trois directions de l'espace. L'échantillon 25 est ainsi sondé en volume. Grâce à la cale piézoélectrique, il est possible d'effectuer une cartographie tridimensionnelle des champs électriques dans l'échantillon 25.

Le faisceau sonde 23 est détecté et enregistré par les moyens de cartographie du déphasage du faisceau lumineux 7. Plus précisément, ces moyens comportent des détecteurs 29 et une électronique de traitement et d'asservissement 31.

Les détecteurs 29 sont des photodiodes ultra-rapides à haute sensibilité telles que celles décrites dans le mémoire précité de la thèse doctorale de P. F. Cohadon. Ces détecteurs 29 servent aussi bien pour l'asservissement de la longueur relative des chemins optiques du faisceau de référence 21 et du faisceau sonde 23, que pour l'enregistrement du signal transmis par l'échantillon 25.

L'électronique de traitement et d'asservissement 31 est une électronique haute fréquence connue de l'Homme du Métier.

Le dispositif 1 comporte en outre des moyens de balayage 33 du faisceau sonde 23 sur l'échantillon 25.

Ces moyens de balayage 33 sont illustrés de manière plus détaillée par la figure 2. De nombreux modes de réalisation des moyens de balayage 33 peuvent bien entendu être envisagés par l'Homme du Métier. Seul, ici, un mode de réalisation est présenté. Selon ce mode de réalisation, les moyens de balayage 33 comportent quatre déflecteurs acousto-optiques 35.

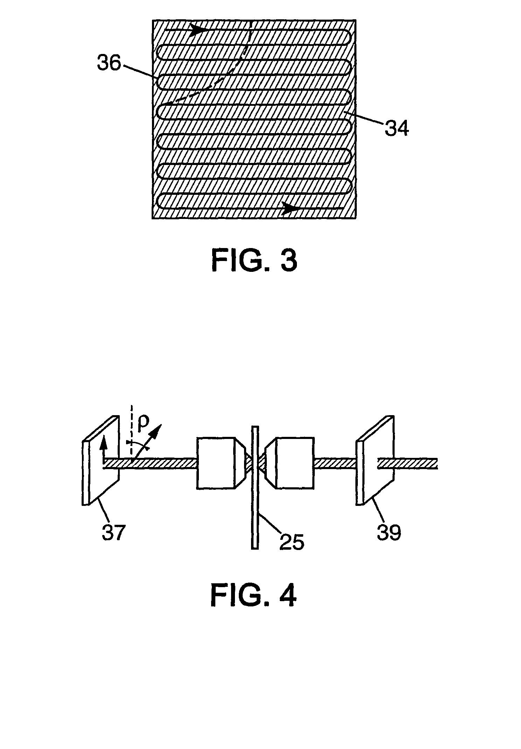

Deux de ces déflecteurs 35 sont placés en amont du microscope confocal 15 pour défléchir le faisceau sonde 23. Ces déflecteurs 35 en amont du microscope confocal sont inclinés de manière à ne conserver que l'ordre 1 du faisceau parallèle à l'axe optique. L'un de ces deux déflecteurs génère un balayage de l'échantillon 25, avec le faisceau sonde 23, selon une première direction de l'espace, à une fréquence fx, qui est aussi la fréquence d'acquisition. L'autre de ces deux déflecteurs génère un balayage de l'échantillon 25, avec le faisceau sonde 23, selon une deuxième direction de l'espace, à une fréquence fy (voir figure 3). On forme ainsi une image de n pixels selon la première direction et m pixels selon la deuxième direction. Si la fréquence d'échantillonnage de signal est fa, les fréquences fx et fy sont choisies telles que fx=fy/n et fy=fa/m et qu'elles soient toutes deux supérieures à la fréquence de coupure fc.

Les deux autres des quatre déflecteurs 35 sont placés en aval du microscope confocal 15 et permettent de redresser le faisceau sonde 23, chacun respectivement dans l'une des première et deuxième directions de l'espace.

Les moyens de balayage 33 permettent de moduler, à la fréquence fx supérieure à la fréquence de coupure fc, le signal provenant des éventuels champs électriques détectés.

Comme illustré par la figure 3, on enregistre le signal transmis par l'échantillon 25 au cours du balayage selon les première et deuxième directions. Ce balayage passe par une zone à sonder 34 et une zone de référence 36. Cette zone de référence 36 peut être une zone de l'échantillon 25 lui-même dans laquelle ne varient pas les champs électriques. On soustrait alors de l'image du signal provenant des éventuels champs électriques détectés, une image de référence, c'est-à-dire une image de la phase sans potentiel ou avec un potentiel de référence ou de repos. On ramène ainsi, sur un fond noir, l'image du signal provenant des éventuelles variations détectées des champs électriques. On a donc réalisé une détection synchrone.

La démodulation du signal provenant des éventuels champs électriques détectés, est réalisée au niveau de l'électronique de traitement et d'asservissement 31, d'une manière classique.

Selon encore une variante du dispositif conforme à l'invention, représentée sur la figure 4 et qui peut être combinée avec le mode de réalisation déjà exposé, celui-ci comporte des moyens de contrôle de la polarisation 37 du faisceau sonde 23. Ces moyens de contrôle de la polarisation 37 permettent de faire varier de manière contrôlée l'état de polarisation du faisceau sonde 23 incident sur l'échantillon 25. Il s'agit par exemple de moyens de contrôle de la polarisation 37 adaptés pour obtenir une polarisation linéaire du faisceau sonde 23 dont l'angle ρ de polarisation dans le plan transverse à l'axe de propagation, est variable sur 360°. De tels moyens de contrôle de la polarisation 37 peuvent être constitués par n'importe quel dispositif connu de l'Homme du Métier, de préparation et de rotation d'un état de polarisation linéaire dans le plan transverse à l'axe optique. En particulier, ils peuvent comprendre une lame demi-onde et/ou un polariseur.

De tels moyens de contrôle de la polarisation 37 sont disposés en amont de la première optique 27. L'Homme du Métier est alors apte à mener les calculs correctifs nécessaires au passage de l'état de polarisation linéaire en amont de cette première optique 27, à l'état de polarisation elliptisé au niveau de l'échantillon 25. Un analyseur de polarisation 39 facultatif peut être placé à la sortie de la deuxième optique 28, en complément des moyens de contrôle de la polarisation 37.

Le dispositif selon l'invention peut être utilisé pour détecter des champs électriques dont les variations interviennent à une fréquence inférieure à la fréquence de coupure fc de l'asservissement de la longueur relative du faisceau de référence 21 et du faisceau sonde 23. Ainsi, il peut être utilisé pour la détection de signaux périodiques ou non, transitoires ou non et reproductibles ou non.

Le dispositif décrit ci-dessus peut être mis en oeuvre dans de nombreuses applications.

A titre d'exemple, ce dispositif peut être mis en oeuvre dans un procédé, conforme à l'invention, de test de composants opto-électroniques.

Dans ce document, on désigne par composant opto-électronique, un composant électronique, microélectronique, optronique, ou bien encore un circuit comprenant des composants d'au moins l'un de ces types. Avantageusement, ces composants opto-électroniques présentent un effet électro-optique, au moins dans une partie de la zone à étudier et/ou à cartographier.

Plus particulièrement, dans ce type de procédé, on crée un potentiel d'excitation périodique et reproductible entre deux électrodes. La zone à sonder 34 comporte au moins une partie d'un composant opto-électronique auquel on applique ce potentiel.

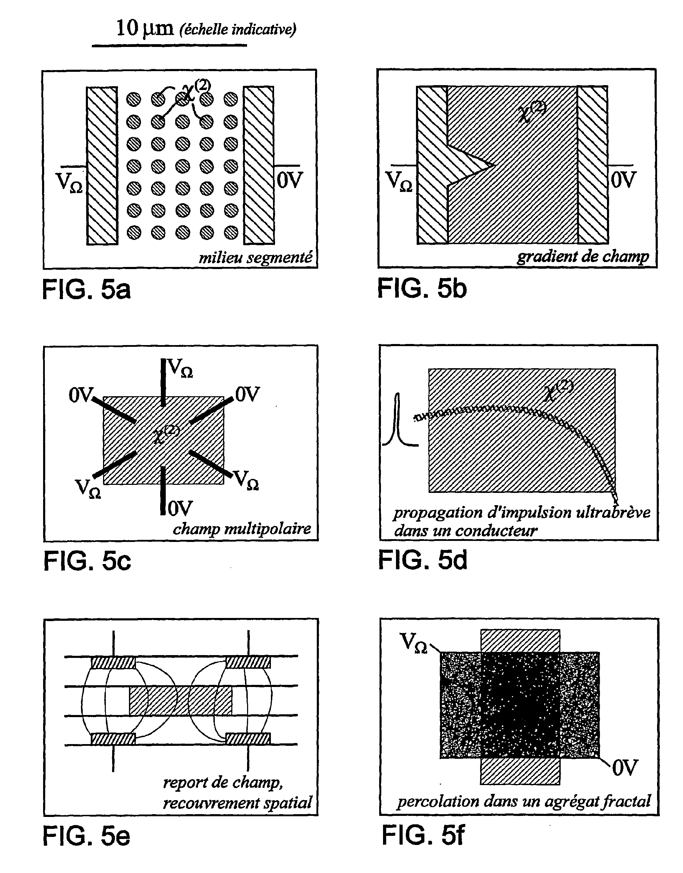

Ce type de procédé peut être utilisé pour l'étude de milieux segmentés (voir figure 5a). Il permet alors de caractériser et de valider des procédés de fabrication de composants opto-électroniques à des échelles microniques et/ou submicroniques. Par exemple, on peut ainsi mesurer la résolution de zones gravées optiquement actives.

Ce type de procédé peut également être mis en oeuvre pour l'étude de gradient de champs électriques, notamment par mise en oeuvre d'électrodes de forme non triviale (figure 5b). Il s'agit par exemple d'électrodes multipolaires (cf. géométrie octupolaire telle que décrite dans l'article J. Zyss, Nonlinear Optics, vol. 1, p. 3, 1991 ; voir également figure 5c), auxquelles on applique un potentiel électrique. Une structure électro-optique de symétrie multipolaire adaptée à celle des électrodes permet de révéler la dérivée du champ ; par exemple la dérivée seconde du champ au centre d'un jeu d'électrode octupolaire tel que décrit à la figure 5c, le champ et sa première dérivée s'annulant par symétrie au centre de la micro-cellule d'orientation qui y est schématisée. Il est ainsi possible, grâce au procédé selon l'invention, de réaliser, la cartographie de gradients ou de courbures de champs électriques dans des zones optiquement actives. Ces cartes de champs peuvent être confrontées à des calculs pour les valider et affiner des modèles ou permettre au contraire de rechercher des configurations de champ dont les propriétés particulières sont difficilement accessibles par le calcul.

Ce type de procédé peut encore être mis en oeuvre pour l'étude de champs multipolaires (voir figure 5c). Dans ce cas, le potentiel est appliqué par l'intermédiaire d'au moins une électrode à symétrie multipolaire. Des configurations d'électrodes à symétrie multipolaire donnent accès à des structures de champs multipolaires. De telles structures de champs multipolaires permettent d'accéder, par exemple, à la compréhension de la répartition en orientation de molécules sous l'influence de ces champs multipolaires.

Selon une autre application du procédé selon l'invention, on étudie la propagation d'impulsions dans un conducteur (fil, circuit intégré, composant opto-électronique, etc.). Ce conducteur est alors placé dans un milieu optiquement actif. En soumettant le milieu à des impulsions ultra courtes, il est possible d'avoir accès, par une étude fréquentielle de la propagation de ces impulsions dans le conducteur, à des régimes transitoires ultra brefs et à des informations sur la résistance ohmiques du conducteur (voir figure 5d).

Selon encore une application du procédé selon l'invention, on étudie des phénomènes de report de champ, de recouvrement spatial, etc. Dans les composants opto-électroniques, le champ appliqué entre des électrodes n'a pas toujours une forme simple (voir figure 5e). Il peut en particulier se poser des problèmes de report de champ et de recouvrement spatial, à la fois statique ("poling" de la couche active du composant) et dynamique (champ de modulation). Grâce à la cartographie des champs électriques, obtenue avec le procédé selon l'invention, il est possible d'optimiser la forme et la structure de ces composants, pour aboutir, par exemple, à la réduction de la tension de commande.

Selon encore une autre application du procédé selon l'invention, on étudie des agrégats fractals et en particulier la percolation dans ces agrégats. Dans la zone à sonder 34 se trouve au moins une partie d'un agrégat fractal (voir figure 5f).

On trouve également des applications particulièrement intéressantes du dispositif et du procédé selon l'invention dans le domaine de la biologie. Dans ce cas, la zone à sonder 34 comporte au moins une partie d'un milieu biologique naturel ou artificiel. En effet, par exemple, la zone à sonder 34 comporte au moins une partie d'une membrane biologique naturelle ou artificielle.

Ainsi, selon une application du procédé selon l'invention, on étudie des systèmes biomimétiques et par exemple la diffusion d'espèces moléculaires à travers des membranes artificielles. Des modifications de ces membranes dues à divers type de phénomènes (chimiques, biochimiques, électriques, rayonnement électromagnétique, etc.) peuvent être détectées grâce au dispositif selon l'invention. Ce type d'application peut s'étendre à l'étude de systèmes microfluidiques, de capsules, de vésicules, etc.

Aussi, selon une application du procédé selon l'invention, on étudie des systèmes biologiques tels que les neurones, les cellules zoologiques ou végétales, etc.

Dans le cadre de l'étude de neurones sains, la zone à sonder 34 comporte au moins une partie d'un neurone ou d'un réseau de neurones et le dispositif selon l'invention donne accès à la propagation des signaux électriques neuronaux et/ou interneuronaux, l'origine de ces signaux, etc. Le dispositif selon l'invention dans ce cas remplace avantageusement les techniques dites de "patch-clamp" pour lesquelles, par exemple pour un champ d'observation de 10x10µm², il aurait fallu plusieurs dizaines de milliers d'électrodes, ou plus, pour obtenir une cartographie équivalente. Grâce au dispositif selon l'invention, on s'affranchit en outre des problèmes de contact, d'encombrement stérique, etc.

Le dispositif selon l'invention, permet aussi l'étude de neurones perturbés ou pathologiques, sclérosés, dégénérés, etc.

Grâce au dispositif selon l'invention, on peut aussi observer des phénomènes électriques à petites échelles, tels que les phénomènes de surtension ou ceux se produisant dans les réactions chimiques d'oxydo-réduction, dans les réacteurs chimiques à des échelles nanométriques ou non, au niveau de micelles, de complexes argilo-humique, etc. La zone à sonder 34 constitue alors au moins une partie d'un milieu chimique.

Dans certains cas, que ce soit en électronique ou en biologie, le milieu doit être dopé avec des molécules ou des ions électro-optiques, afin d'exacerber les propriétés électro-optiques du milieu et/ou permettre d'observer des champs électriques dans des milieux dépourvus de telles propriétés.

A titre d'exemple de molécules électro-optiques, on cite les molécules suivantes :
- La molécule "DR1" (Dispersed Red One) est bien connue de l'Homme du Métier. Elle est plutôt utilisée pour l'étude de composants opto-électroniques et les systèmes biomimétiques.
- La molécule "Cristal Violet" est aussi bien connue de l'Homme du Métier. Elle constitue un exemple d'octupôle. Elle est sensible aux gradients successifs du champ électrique et non au champ électrique lui-même. On n'est en effet pas limité dans la détection des champs électriques selon le procédé conforme à la présente invention, à des non-linéarités d'ordre 2, on peut utiliser des non linéarités d'ordre supérieur.
- Des molécules dérivées de la phtalocyanine par substitution périphérique avec des groupements donneurs et accepteurs d'électrons en géométrie non-centrosymétrique, sont également connues de l'Homme du Métier. Elles peuvent être utilisées pour l'étude de systèmes biologiques.

De nombreuses autres molécules peuvent être utilisées. Il peut s'agir en particulier de différentes formes des molécules indiquées ci-dessus ou dérivées de ces dernières.

## Revendications

1. Dispositif de détection non invasive des propriétés d'un milieu par interférométrie, ce dispositif comprenant :
- une source optique (3) pour éclairer au moins une zone à sonder (34) du milieu avec un faisceau lumineux (19) dont le parcours définit un axe optique,
- des moyens de mesure des variations de la phase du faisceau lumineux (7) au cours de son passage dans la zone à sonder (34), ces moyens de mesure
. comprenant un interféromètre (5) pour diviser le faisceau lumineux (19) en un faisceau de référence (21) et un faisceau sonde (23), dans cet interféromètre (5) l'asservissement des longueurs respectives du faisceau de référence (21) et du faisceau sonde (23) étant actif jusqu'à une fréquence de coupure fc, et
. ayant une fréquence d'échantillonnage de signal fa,
**caractérisé par le fait qu'**il comporte des moyens de balayage (33) adaptés pour balayer, avec le faisceau sonde (23), la zone à sonder (34) et une zone de référence (36), avec une fréquence f d'acquisition d'images enregistrées par les moyens de mesure des variations de la phase du faisceau lumineux (7), supérieure à la fréquence de coupure fc.

2. Dispositif selon la revendication 1, dans lequel les moyens de balayage (33) balayent la zone à sonder (34) et la zone de référence (36), selon une première direction de l'espace à une fréquence fx et selon une deuxième direction de l'espace avec une fréquence fy, pour former une image de n pixels selon la première direction et m pixels selon la deuxième direction, les fréquences fx et fy étant choisies telles que fx=fy/n et fy=fa/m, fx et fy étant supérieures à fc.

3. Dispositif selon l'une des revendications 1 et 2, dans lequel les moyens de mesure des variations de la phase du faisceau lumineux (7) comprennent un microscope confocal (15), dans lequel est placée la zone à sonder (34) de manière adaptée pour former une image d'un plan de la zone à sonder (34).

4. Dispositif selon l'une des revendications précédentes, comportant des moyens de déplacement du milieu, selon les trois dimensions de l'espace, sous le faisceau sonde (23).

5. Dispositif selon l'une des revendications précédentes, dans lequel, les moyens de balayage (33) comprennent quatre déflecteurs acousto-optiques (35), deux pour défléchir le faisceau lumineux, en amont du microscope confocal (15), chacun respectivement dans l'une des première et deuxième directions de l'espace et deux pour redresser le faisceau lumineux chacun respectivement dans l'une des première et deuxième directions de l'espace, en aval du microscope confocal (15).

6. Dispositif selon la revendication 5, dans lequel au moins un déflecteur acousto-optique (35), en aval du microscope confocal (15), est réglé pour incliner l'ordre 0 du faisceau lumineux par rapport à l'axe optique, et conserver l'ordre 1 paraxial.

7. Dispositif selon la revendication 6, comprenant, une lunette de Galilée pour augmenter l'angle α entre l'ordre 1 et l'axe optique.

8. Dispositif selon l'une des revendications précédentes comportant en outre, en amont du microscope confocal (15), des moyens de contrôle de la polarisation (37) du faisceau sonde (23) en incidence sur la zone à sonder (34).

9. Procédé de détection non invasive des propriétés d'un milieu par interférométrie, dans lequel :
- on éclaire au moins une zone à sonder (34) du milieu avec une source optique (3) générant un faisceau lumineux (19) dont le parcours définit un axe optique,
- on utilise un interféromètre (5) pour diviser le faisceau lumineux (19) en un faisceau de référence (21) et un faisceau sonde (23) et mesurer le déphasage entre le faisceau de référence (21) et le faisceau sonde (23) après traversée de la zone à sonder (34),
- on asservit des longueurs respectives du faisceau de référence (21) et du faisceau sonde (23) à des moyens de photo-détection (29) et
- on acquiert, avec les moyens de photo-détection (29), des images correspondant à la mesure du déphasage en différents points de la zone à sonder (34), à une fréquence d'échantillonnage de signal fa supérieure à la fréquence de coupure fc de l'asservissement des longueurs respectives du faisceau de référence (21) et du faisceau sonde (23),
**caractérisé par le fait qu'**on balaye avec le faisceau sonde (23), la zone à sonder (34) et une zone de référence (36), avec une fréquence f d'acquisition d'images enregistrées par les moyens de mesure des variations de la phase du faisceau lumineux (7), supérieure à la fréquence de coupure fc.

10. Procédé selon la revendication 9, dans lequel on procède à un balayage de la zone à sonder (34) et la zone de référence (36), selon une première direction de l'espace à une fréquence fx et selon une deuxième direction de l'espace avec une fréquence fy, pour former une image de n pixels selon la première direction et m pixels selon la deuxième direction, les fréquences fx et fy étant choisies telles que fx=fy/n et fy=fa/m, fx et fy étant supérieures à fc.

11. Procédé selon l'une des revendications 9 et 10, dans lequel on place la zone à sonder (34) dans un microscope confocal (15), de manière adaptée pour former une image d'un plan de la zone à sonder (34).

12. Procédé selon l'une des revendications 9 à 11, dans lequel on déplace le milieu, selon les trois dimensions de l'espace, sous le faisceau sonde (23).

13. Procédé l'une des revendications 9 à 12, dans lequel on excite le milieu à une fréquence fe et on mesure la variation de la phase du faisceau sonde (23) par rapport à celle du faisceau de référence (21), à cette même fréquence fe.

14. Procédé selon l'une des revendications 9 à 13, dans lequel on dévie, grâce à au moins un déflecteur acousto-optique (35) en aval du microscope confocal, l'ordre 0 du faisceau lumineux par rapport à l'axe optique, et conserver l'ordre 1 paraxial.

15. Procédé selon la revendication 14, dans lequel on augmente l'angle α entre l'ordre 1 et l'axe optique, grâce à une lunette de Galilée.

16. Procédé selon l'une des revendications 9 à 15 dans lequel la zone à sonder (34) comporte au moins une partie d'un composant opto-électronique auquel on applique un potentiel.

17. Procédé selon la revendication 16, dans lequel on applique le potentiel par l'intermédiaire d'au moins une électrode dont la forme est adaptée pour créer un gradient de champ électrique.

18. Procédé selon l'une des revendications 16 et 17, dans lequel on applique le potentiel par l'intermédiaire d'au moins une électrode multipolaire.

19. Procédé selon l'une des revendications 16 à 18, dans lequel on place le composant opto-électronique dans un milieu optiquement actif.

20. Procédé selon l'une des revendications 16 à 19, dans lequel on étudie la propagation d'une impulsion électrique dans le composant opto-électronique.

21. Procédé selon l'une des revendications 9 à 15, dans lequel la zone à sonder (34) comporte au moins une partie d'un agrégat fractal.

22. Procédé selon l'une des revendications 9 à 15, dans lequel la zone à sonder (34) comporte au moins une partie d'un milieu biologique.

23. Procédé selon la revendication 22, dans lequel la zone à sonder (34) comporte au moins une partie d'une membrane biologique.

24. Procédé selon l'une des revendications 22 et 23, dans lequel la zone à sonder (34) comporte au moins une partie d'un neurone ou d'un réseau de neurones.

25. Procédé selon l'une des revendications 9 à 15, dans lequel la zone à sonder (34) comporte au moins une partie d'une membrane artificielle.

26. Procédé selon l'une des revendications 9 à 15, dans lequel la zone à sonder (34) constitue au moins une partie d'un milieu chimique.

27. Procédé selon l'une des revendications 9 à 26, dans lequel on dope le milieu avec des molécules ou des ions ayant des propriétés électro-optiques, ou conférant au milieu des propriétés électro-optiques, afin d'exacerber les propriétés électro-optiques du milieu, si celui-ci en est déjà doté, ou pour révéler la présence de champs électriques dans un milieu qui ne possède pas intrinsèquement de telles propriétés.

28. Procédé selon l'une des revendications 9 à 27, dans lequel, connaissant la distribution des propriétés électro-optiques du milieu, on réalise une cartographie du champ électrique dans le milieu.

29. Procédé selon l'une des revendications 9 à 27, dans lequel on génère un champ électrique de configuration connue dans le milieu, de manière à révéler des propriétés électro-optiques du milieu.

## Claims

1. Device for the non-invasive detection of the properties of a medium by interferometry, this device comprising:
- an optical source (3) for illuminating at least one region (34) of the medium to be probed, with a light beam (19) whose path defines an optical axis;
- means (7) for measuring the variations in the phase of the light beam during its passage through the region (34) to be probed, these measurement means
· comprising an interferometer (5) for splitting the light beam (19) into a reference beam (21) and a probe beam (23), in this interferometer (5) the servocontrol of the respective path lengths of the reference beam (21) and of the probe beam (23) being active up to a cut-off frequency f_{c} and
· having a signal sampling frequency fₐ,
**characterized in that** it includes scanning means (33) suitable for scanning, with the probe beam (23), the region (34) to be probed and a reference region (36) with an image acquisition frequency f for the images recorded by the means (7) for measuring the variations in the phase of the light beam above the cut-off frequency f_{c}.

2. Device according to Claim 1, in which the scanning means (33) scan the region (34) to be probed and the reference region (36) along a first direction in space at a frequency fₓ and along a second direction in space at a frequency f_{y}, in order to form an image of n pixels along the first direction and m pixels along the second direction, the frequencies fₓ and f_{y} being chosen such that fₓ = f_{y}/n and f_{y} = fₐ/m, fₓ and f_{y} being greater than fc.

3. Device according to either of Claims 1 and 2, in which the means (7) for measuring the variations in the phase of the light beam comprise a confocal microscope (15) in which the region (34) to be probed is placed in a manner suitable for forming an image of a plane of the region (34) to be probed.

4. Device according to one of the preceding claims, comprising means for moving the medium, along the three directions in space, in the probe beam (23).

5. Device according to one of the preceding claims, in which the scanning means (33) comprise four acoustooptic deflectors (35), two for deflecting the light beam, upstream of the confocal microscope (15), each in one of the first and second directions in space respectively, and two for rectifying the light beam, each in one of the first and second directions in space respectively, downstream of the confocal microscope (15).

6. Device according to Claim 5, in which at least one acoustooptic deflector (35), downstream of the confocal microscope (15) is set so as to make the 0th-order of the light beam inclined to the optical axis and to retain the paraxial 1st-order.

7. Device according to Claim 6, comprising a Galileo telescope for increasing the angle α between the 1st-order and the optical axis.

8. Device according to one of the preceding claims, which further includes, upstream of the confocal microscope (15), means (37) for controlling the polarization of the probe beam (23) incident on the region (34) to be probed.

9. Method of non-invasively detecting the properties of a medium by interferometry, in which:
- at least one region (34) of the medium to be probed is illuminated with an optical source (3) that generates a light beam (19), the path of which defines an optical axis;
- an interferometer (5) is used to split the light beam (19) into a reference beam (21) and a probe beam (23) and to measure the phase shift between the reference beam (21) and the probe beam (23) after the latter has passed through the region (34) to be probed;
- the respective path lengths of the reference beam (21) and the probe beam (23) are servocontrolled by photodetection means (29); and
- images corresponding to the measurement of the phase shift at various points in the region (34) to be probed are acquired, with the photodetection means (29), at a signal sampling frequency fₐ above the cut-off frequency f_{c} for servocontrolling the respective path lengths of the reference beam (21) and the probe beam (23),
**characterized in that** the region (34) to be probed and a reference region (36) are scanned with the probe beam (23) at an image acquisition frequency f for images recorded by the means (7) for measuring the variations in the phase of the light beam above the cut-off frequency f_{c}.

10. Method according to Claim 9, in which the region (34) to be probed and the reference region (36) are scanned along a first direction in space at a frequency fₓ and along a second direction in space at a frequency f_{y}, in order to form an image of n pixels along the first direction and m pixels along the second direction, the frequencies fₓ and f_{y} being chosen such that fₓ = f_{y}/n and f_{y} = fₐ/m, fₓ and f_{y} being greater than f_{c}.

11. Method according to either of Claims 9 and 10, in which the region (34) to be probed is placed in a confocal microscope (15) in a manner suitable for forming an image of one plane of the region (34) to be probed.

12. Method according to one of Claims 9 to 11, in which the medium is moved, along the three directions in space, in the probe beam (23).

13. Method according to one of Claims 9 to 12, in which the medium is excited at a frequency fₑ and the variation in the phase of the probe beam (23) relative to that of the reference beam (21) is measured at this same frequency fₑ.

14. Method according to one of Claims 9 to 13, in which the 0th-order of the light beam is deflected relative to the optical axis by means of at least one acoustooptic deflector (35), downstream of the confocal microscope, and the paraxial 1st-order is retained.

15. Method according to Claim 14, in which the angle α between the 1st-order and the optical axis is increased by means of a Galileo telescope.

16. Method according to one of Claims 9 to 15, in which the region (34) to be probed includes at least one part of an optoelectronic component to which a potential is applied.

17. Method according to Claim 16, in which the potential is applied via at least one electrode, the shape of which is suitable for creating an electric field gradient.

18. Method according to either of Claims 16 and 17, in which the potential is applied via at least one multipolar electrode.

19. Method according to one of Claims 16 to 18, in which the optoelectronic component is placed in an optically active medium.

20. Method according to one of Claims 16 to 19, in which the propagation of an electrical pulse in the optoelectronic component is studied.

21. Method according to one of Claims 9 to 15, in which the region (34) to be probed includes at least one part of a fractal aggregate.

22. Method according to one of Claims 9 to 15, in which the region (34) to be probed includes at least one part of a biological medium.

23. Method according to Claim 22, in which the region (34) to be probed includes at least one part of a biological membrane.

24. Method according to either of Claims 22 and 23, in which the region (34) to be probed includes at least one part of a neuron or of a neural network.

25. Method according to one of Claims 9 to 15, in which the region (34) to be probed includes at least one part of an artificial membrane.

26. Method according to one of Claims 9 to 15, in which the region (34) to be probed constitutes at least one part of a chemical medium.

27. Method according to one of Claims 9 to 26, in which the medium is doped with molecules or ions having electrooptic properties, or conferring electrooptic properties on the medium, so as to accentuate the electrooptic properties of the medium, if the latter is already endowed therewith, or to reveal the presence of electric fields in a medium that does not possess such properties intrinsically.

28. Method according to one of Claims 9 to 27, in which, knowing the distribution of the electrooptic properties of the medium, a mapping of the electric field in the medium is carried out.

29. Method according to one of Claims 9 to 27, in which an electric field of known configuration is generated in the medium so as to reveal electrooptic properties of the medium.

## Patentansprüche

1. Vorrichtung zur nicht-invasiven Detektion von Eigenschaften eines Mediums durch Interferometrie, wobei diese Vorrichtung umfaßt:
- eine Lichtquelle (3) zum Beleuchten wenigstens eines zu untersuchenden Bereichs (34) des Mediums mit einem Lichtstrahl (19), dessen Laufstrecke eine optische Achse definiert,
- Mittel zum Messen von Änderungen der Phase des Lichtstrahls (7) im Verlauf seines Durchgangs in den zu untersuchenden Bereich (34), wobei diese Meßmittel
• ein Interferometer (5) zum Aufteilen des Lichtstrahls (19) in einen Referenstrahl (21) und einen Untersuchungsstrahl (23) umfaßt, wobei in diesem Interferometer (5) die Unterdrückung jeweiliger Wellenlängen des Referenzstrahles (21) und des Untersuchungsstrahles (23) bis zu einer Grenzfrequenz fc aktiv ist, und
• eine Signalabtastfrequenz fa haben,
**dadurch gekennzeichnet, daß** sie Abtastmittel (33) umfaßt, die eingerichtet sind, den zu untersuchenden Bereich (34) und einen Referenzbereich (36) mit dem Untersuchungsstrahl (23) abzutasten mit einer Frequenz f zur Aufnahme von Bildern, die von den Mitteln zum Messen der Änderungen der Phase des Lichtstrahls (7) aufgezeichnet werden, die größer als die Grenzfrequenz fc ist.

2. Vorrichtung nach Anspruch 1, bei der die Abtastmittel (33) den zu untersuchenden Bereich (34) und den Referenzbereich (36) entlang einer ersten Raumrichtung mit einer Frequenz fx und entlang einer zweiten Raumrichtung mit einer Frequenz fy abtasten, um ein Bild aus n Pixeln entlang der ersten Richtung und aus m Pixeln entlang der zweiten Richtung zu bilden, wobei die Frequenzen fx und fy derart gewählt sind, daß fx=fy/n und fy=fa/m, und fx und fy größer als fc sind.

3. Vorrichtung nach einem der Ansprüche 1 und 2, bei der die Mittel zum Messen von Änderungen der Phase des Lichtstrahls (7) ein konfokales Mikroskop (15) umfassen, in dem der zu untersuchende Bereich (34) auf eine Weise angeordnet ist, die zum Bilden eines Bildes einer Ebene des zu untersuchenden Bereiches (34) geeignet ist.

4. Vorrichtung nach einem der vorhergehenden Ansprüche, die Mittel zum Verschieben des Mediums entlang der drei Raumrichtungen unter dem Untersuchungsstrahl (23) umfaßt.

5. Vorrichtung nach einem der vorhergehenden Ansprüche, bei der die Abtastmittel (33) vier akustisch-optische Deflektoren (35) umfassen, zwei zum Ablenken des Lichtstrahles stromauf des konfokalen Mikroskops (15), jeden entsprechend in eine unter einer ersten und einer zweiten Raumrichtung, und zwei zum Wiederausrichten des Lichtstrahles, jeden entsprechend in eine der ersten und der zweiten Raumrichtung, stromab des konfokalen Mikroskops (15).

6. Vorrichtung nach Anspruch 5, bei der wenigstens ein akustisch-optischer Deflektor (35) stromab des konfokalen Mikroskops (15) durch Neigen der 0. Ordnung des Lichtstrahles bezüglich der optischen Achse und durch Aufrechterhalten der achsennahen 1. Ordnung eingestellt wird.

7. Vorrichtung nach Anspruch 6, mit einem gallileischen Fernrohr zum Erhöhen des Winkels α zwischen der 1. Ordnung und der optischen Achse.

8. Vorrichtung nach einem der vorhergehenden Ansprüche, die zudem stromauf des konfokalen Mikroskops (15) Mittel zum Steuern der Polarisation (37) des Untersuchungsstrahls (23) beim Einfall auf den zu untersuchenden Bereich (34) umfaßt.

9. Verfahren zum nicht-invasiven Detektieren von Eigenschaften eines Mediums durch Interferometrie, bei dem:
- wenigstens ein zu untersuchender Bereich (34) des Mediums mit einer Lichtquelle (3) beleuchtet wird, die einen Lichtstrahl (19) erzeugt, dessen Verlauf eine optische Achse definiert,
- ein Interferometer (5) zum Aufteilen des Lichtstrahls (19) in einen Referenzstrahl (21) und einen Untersuchungsstrahl (23) und zum Messen des Phasenunterschiedes zwischen dem Referenzstrahl (21) und dem Untersuchungsstrahl (23) nach Durchgang durch den zu untersuchenden Bereich (34) verwendet wird,
- jeweilige Wellenlängen des Referenzstrahls (21) und des Untersuchungsstrahls (23) an Lichtdetektionsmitteln (29) unterdrückt werden, und
- mit den Lichtdetektionsmitteln (29) Bilder aufgenommen werden, die der Messung des Phasenunterschiedes an verschiedenen Punkten des zu untersuchenden Bereiches (34) entsprechen, mit einer Signalabtastfrequenz fa, die größer als die Grenzfrequenz fc der Unterdrückung der jeweiligen Wellenlängen des Referenzstrahls (21) und des Untersuchungsstrahls (23) ist,
**dadurch gekennzeichnet, daß** der zu untersuchende Bereich (34) und ein Referenzbereich (36) mit dem Untersuchungsstrahl (23) abgetastet werden, mit einer Frequenz f zur Aufnahme von Bildern, die von den Mitteln zum Messen der Änderungen der Phase des Lichtstrahls (7) aufgenommen werden, die größer als die Grenzfrequenz fc ist.

10. Verfahren nach Anspruch 9, bei dem eine Abtastung des zu untersuchenden Bereiches (34) und des Referenzbereiches (36) entlang einer ersten Raumrichtung mit einer Frequenz fx und entlang einer zweiten Raumrichtung mit einer Frequenz fy durchgeführt wird, um ein Bild aus n Pixeln entlang der ersten Richtung und m Pixeln entlang der zweiten Richtung zu bilden, wobei die Frequenzen fx und fy derart ausgewählt werden, daß fx=fy/n und fy=fa/m, und fx und fy größer als fc sind.

11. Verfahren nach einem der Ansprüche 9 und 10, bei dem der zu untersuchende Bereich (34) in einem konfokalen Mikroskop (15) auf eine Weise angeordnet wird, die geeignet ist, ein Bild einer Ebene des zu untersuchenden Bereiches (34) zu bilden.

12. Verfahren nach einem der Ansprüche 9 bis 11, bei dem das Medium entlang der drei Raumrichtungen unter dem Untersuchungsstrahl (23) verschoben wird.

13. Verfahren nach einem der Ansprüche 9 bis 12, bei dem das Medium mit einer Frequenz fe angeregt wird und die Änderung der Phase des Untersuchungsstrahls (23) bezüglich derjenigen des Referenzstrahles (21) bei genau dieser Frequenz fe gemessen wird.

14. Verfahren nach einem der Ansprüche 9 bis 13, bei dem mittels eines akustisch-optischen Deflektors (35) stromauf des konfokalen Mikroskops die 0. Ordnung des Lichtstrahles bezüglich der optischen Achse abgelenkt und die achsennahe 1. Ordnung aufrechterhalten wird.

15. Verfahren nach Anspruch 14, bei dem der Winkel α zwischen der 1. Ordnung und der optischen Achse mittels eines galileischen Fernrohrs erhöht wird.

16. Verfahren nach einem der Ansprüche 9 bis 15, bei dem der zu untersuchende Bereich (34) wenigstens einen Teil eines opto-elektronischen Bauteils umfaßt, an dem ein Potential angelegt wird.

17. Verfahren nach Anspruch 16, bei dem das Potential mittels wenigstens einer Elektrode angelegt wird, deren Form geeignet ist, einen elektrischen Feldgradienten zu erzeugen.

18. Verfahren nach einem der Ansprüche 16 und 17, bei dem das Potential mittels wenigstens einer Multipolelektrode angelegt wird.

19. Verfahren nach einem der Ansprüche 16 bis 18, bei dem das opto-elektronische Bauteil in einem optisch aktiven Medium angeordnet wird.

20. Verfahren nach einem der Ansprüche 16 bis 19, bei dem die Ausbreitung eines elektrischen Impulses im opto-elektronischen Bauteil untersucht wird.

21. Verfahren nach einem der Ansprüche 9 bis 15, bei dem der zu untersuchende Bereich (34) wenigstens einen Teil eines fraktalen Aggregats umfaßt.

22. Verfahren nach einem der Ansprüche 9 bis 15, bei dem der zu untersuchende Bereich (34) einen Teil eines biologischen Mediums umfaßt.

23. Verfahren nach Anspruch 22, bei dem der zu untersuchende Bereich (34) wenigstens einen Teil einer biologischen Membran umfaßt.

24. Verfahren nach einem der Ansprüche 22 und 23, bei dem der zu untersuchende Bereich (34) wenigstens einen Teil eines Neurons oder eines Neuronennetzes umfaßt.

25. Verfahren nach einem der Ansprüche 9 bis 15, bei dem der zu untersuchende Bereich (34) wenigstens einen Teil einer künstlichen Membran umfaßt.

26. Verfahren nach einem der Ansprüche 9 bis 15, bei dem der zu untersuchende Bereich (34) wenigstens einen Teil eines chemischen Mediums bildet.

27. Verfahren nach einem der Ansprüche 9 bis 26, bei dem das Medium mit Molekülen oder Ionen dotiert wird, die elektro-optische Eigenschaften haben, oder dem Medium elektro-optische Eigenschaften verleihen, um die elektro-optischen Eigenschaften des Mediums anzuregen, wenn dieses bereits dotiert ist, oder das Vorliegen elektrischer Felder in einem Medium hervorzurufen, das von sich aus keine solchen Eigenschaften besitzt.

28. Verfahren nach einem der Ansprüche 9 bis 27, bei dem in Kenntnis der Verteilung der elektro-optischen Eigenschaften des Mediums eine Kartographie des elektrischen Feldes im Medium durchgeführt wird.

29. Verfahren nach einem der Ansprüche 9 bis 27, bei dem ein bekanntes elektrisches Konfigurationsfeld erzeugt wird, um elektro-optische Eigenschaften des Mediums hervorzurufen.
